# EUROPEAN PATENT APPLICATION

(11) **EP 3 396 934 A1**
(43) Date of publication of application: **31.10.2018**
(21) Application number: 17382220.6
(22) Date of filing: 26.04.2017
(51) Int. Cl.: H04M 3/436

(54) **METHOD FOR MANAGING TIME RESTRICTED COMMUNICATIONS**

(71) Applicant: Telefonica Digital España, S.L.U., 28013 Madrid (ES)
(72) Inventor: BARRIOS BENITO, Miguel, 28013 MADRID (ES); SERNA POZUELO, Jorge, 28013 MADRID (ES); SANTA CECILIA SANCHEZ, Cristina, Isabel, 28013 MADRID (ES); BEN YOCHANAN, Noam, 28014 MADRID (ES)
(74) Representative: Herrero & Asociados, S.L.

(57) **Abstract**

Present invention refers to a method for managing time restricted communications between users of a telecommunication network comprising the steps of: sending an invitation message to establish a time restricted call from a first user's communication device to a second user's communication device, wherein the invitation message is associated to a predetermined time parameter of maximum length for the call; receiving the invitation message associated to the predetermined time parameter of maximum length for the time restricted call by the second user's communication device; in case the second user accepts establishing the time restricted call of the predetermined maximum length associated to the invitation message, establishing the time restricted call between the first user and the second user; starting a time counter, in response to establishing the time restricted call; and, once the time counter reaches the predetermined maximum length associated to the invitation message, automatically finishing the time restricted call.

## Description

### TECHNICAL FIELD OF THE INVENTION

Present invention generally relates to telecommunication networks management and more specifically to methods for managing a time restricted communication between at least two communication devices, such as smartphones.

### BACKGROUND OF THE INVENTION

Nowadays, there are several products and functionalities that allow users to limit calls in those situations where they cannot or do not want to have an audio conversation.

On one hand, regular calls can always be rejected and hung up, which immediately ends the conversation, so regular phone calls rejection serves for the case when the callee really does not want or cannot talk at all at that moment. Moreover, such rejection might be considered rude by the caller.

Another option commonly available for users is voicemail, as an extension to regular calls, voicemail act as a fallback where the caller can still leave a message to the callee even if the callee was not able to answer. Main problem with voicemail is that it is often ignored, meaning the caller will not trust that the callee will actually listen to the message.

On the other hand, recorded audio messages can be considered as a convenient time restricted communication under certain circumstances. If the message to be transmitted is short and it does not require further interaction, the caller may record and send an audio message. This is a pretty common feature offered by OTT services such as WhatsApp, Facebook Messenger, etc. Both voicemail and recorded audio messages have the limit of being one-sided and non-interactive in nature. So, for instance if the audio quality is bad or there is too much ambient noise, the caller will not notice until it is too late and the message is already sent. In addition, voicemail and audio messages require storage. For voicemail this is server storage, for audio messages this can be a server, the device itself or both and storage requires some management (deleting, playing back, etc.).

All the aforementioned features are triggered from the caller's point of view, however the callee can also actively configure his incoming calls service so that it is adjusted to his needs at any moment. For instance, contact blocking allows the user to receive calls only from a certain subset of people in his phone book, or for instance, the "Do not disturb" (DND) mode, which enables users to block incoming calls during a period of time. However, blocking contacts and DND mode are useful for situations where the callee does not want to receive any call at all from blocked contacts or just not receive calls from anybody during a certain amount of time, but again this can be too extreme for some situations.

Therefore, current solutions to limit calls face some problems. Unavoidably, the real-time aspect of a communication is missing, so there is a risk of losing important information for the callee. As the callee is unaware of the time required to attend an eventual call, he could not balance if a call is worth it to be attended, so there may be some cases where the callee rejects an incoming call for fear it will last longer than he can afford, but he would be willing to answer if there was some kind of guarantee that the call will be short.

None of the aforementioned solutions from prior art address this problem, but they all leave the callee with the dilemma: either accept the call and suffer the (time related) consequences, or do not accept it and suffer the risk of missing important information, besides be considered rude or getting potentially bad quality voice messages.

### SUMMARY OF THE INVENTION

Present invention solves the aforementioned problems by leveraging a contract between caller and callee regarding the length of the call. Thus, a first aspect of present invention refers to a method for managing time restricted communications between users of a telecommunication network comprising the steps of:
a) sending an invitation message to establish a time restricted call from a first user's communication device to a second user's communication device, wherein the invitation message is associated to a predetermined time parameter of maximum length for the call;
b) receiving the invitation message associated to the predetermined time parameter of maximum length for the time restricted call by the second user's communication device;
c) in case the second user accepts establishing the time restricted call of the predetermined maximum length associated to the invitation message, establishing the time restricted call between the first user and the second user;
d) starting a time counter, in response to establishing the time restricted call;
e) once the time counter reaches the predetermined maximum length associated to the invitation message, automatically finishing the time restricted call.

According to one embodiment of present invention, the invitation message to establish a time restricted call from a first user's communication device to a second user's communication device is sent in response to the previous steps of: sending an invitation message to establish a regular call from the second user's communication device to the first user's communication device; and the first user's communication device rejecting the invitation message to establish a regular call.

Alternatively, in one embodiment of the invention, the invitation message to establish a time restricted call from a first user's communication device to a second user's communication device is sent by the first user's communication device in response to an invitation message to establish a regular call received from the second user's communication device.

Optionally, according to one particular embodiment of present invention, the first user's communication device is set to only accept time restricted call invitation messages, wherein the invitation message to establish a time restricted call is a promoting message, prompting the second user to accept a time restricted call instead of the regular call.

In one particular embodiment of present invention, the second user is marked as time restricted call user on the contact list of the first user, wherein the invitation message to establish a time restricted call is a promoting message, prompting the second user to accept a time restricted call instead the regular call.

The second user's communication device may be already engaged in a regular call with a third user's communication device when receiving the invitation message from the first user's communication device, so according to one particular embodiment, present invention comprises the steps of: providing a notification of an incoming time restricted call to the second user's communication device; in case the second user accepts the incoming time restricted call, putting on hold the third user's communication device; establishing a time restricted call between the first user and the second user; and, once the time restricted call is finished, recovering the regular call between the first user and the third user.

All the messages sent/received by user's communication devices may be exchanged through a communication server in charge of call signaling. Moreover, in the case the communication server is comprised, present invention may further comprise the time counter implemented in the communication server and finishing time restricted calls by the communication server sending call disconnect requests to at least one of the first and the second user's communication devices.

Alternatively, present invention consider a serverless embodiment, wherein the time counter is implemented in the first user's communication device, further comprising finishing the time restricted call by the first user's communication device sending a call disconnect request to the second user's communication device.

In one embodiment of the invention, accepting by the second user's communication device, the invitation message sent by the first user's communication device, further comprising: displaying a prompt message, containing the predetermined time parameter of maximum length for the call, on a display of the second user's communication device; and the second user making an interaction on the second user's communication device to accept establishing the time restricted call.
The maximum length of the time parameter associated to a time restricted call, according to different embodiments of present invention, may be of a fixed length or may be also determined by the first user or the second user.

A second aspect of present invention refers to a communication device for managing time restricted communications with other communication devices of a telecommunication network, configured for:
- sending invitation messages to establish time restricted calls with other user's communication devices, wherein the invitation message is associated to a predetermined time parameter of maximum length for the call;
- receiving, from other user's communication devices, invitation messages associated to the predetermined time parameter of maximum length for the time restricted calls;
- accepting to establish time restricted calls of the predetermined maximum length associated to the invitation message;
- establishing a time restricted call with other communication devices;
- starting a time counter, in response to establishing the time restricted call; and
- once the time counter reaches the predetermined maximum length assigned, automatically finishing the time restricted call.

Another aspect of present invention refers to a network element, such as a communication server, for managing time restricted communications between a first user's communication device and a second user's communication device of a telecommunication network, configured for:
- exchanging messages sent by the first user's communication device and by the second user's communication device;
- starting a time counter, in response to establishing a time restricted call;
- once the time counter reaches a predetermined maximum length, automatically finishing the time restricted call.

Another aspect of present invention refers to a system for managing time restricted communications between users of a telecommunication network comprising:
- a first communication device configured for sending an invitation message to establish a time restricted calls with a second user's communication devices, wherein the invitation message is associated to a predetermined time parameter of maximum length for the call; and if the second user accepts the invitation, establishing the time restricted call between the first user and the second user;
- a second communication device configured for receiving, from the first user's communication device, the invitation messages associated to the predetermined time parameter of maximum length for the time restricted calls;
- a communication server configured for exchanging the messages sent by the first user's communication device and by the second user's communication device; starting a time counter, in response to establishing a time restricted call; and once the time counter reaches a predetermined maximum length, automatically finishing the time restricted call.

A last aspect of the invention refers to a computer program product comprising computer program code adapted to perform the method of present invention when said program code is executed on a computer, a digital signal processor, a field-programmable gate array, an application-specific integrated circuit, a micro-processor, a micro-controller, or any other form of programmable hardware.

Therefore, technical features of present invention involve several advantages in view of prior art. Flash Calls (synonym of "time restricted calls") keeps all the advantages of the state of the art technologies while adding some more features that make it a more flexible solution. For example, regular calls can only be accepted or rejected, and the callee does not know how long they are going to take, while with flash calls it is possible to negotiate beforehand the duration and then accept or reject it.

Voicemails are a mere fallback when the callee does not want to be disturbed or he is just not reachable at the moment, but in the end it is just a recorded message that will be ignored or eventually answered generating a new call. In contrast, the solution of present invention the phone call still takes place when the caller wanted to start the conversation and with the certainty for the callee that the duration will be limited.

Audio messages are similar to voicemails in the sense that they do not enforce actual conversation, but work as a one direction channel. In contrast, the solution of present invention keeps the immediacy and easy to use of audio messages, adding on top of that, the advantages of actual peer to peer communication.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, are the drawings wherein, by way of illustration and not restrictively, the following has been represented:
**Figure 1****.-** shows one embodiment of the invention, where a first user starts a time restricted call with a second user and, after a predetermined time, the call is automatically finished.
**Figure 2****.-** shows a serverless embodiment of the invention, where a first user starts a time restricted call with a second user and the call is automatically finished by a timer.
**Figure 3****.-** shows one embodiment of the invention, where a first user starts a time restricted call with a second user and the second user finishes the call before the timeout.
**Figure 4****.-** shows one embodiment of the invention, where a first user starts a regular call with a second user, the second user rejects it and sends a time restricted call invitation.
**Figure 5****.-** shows one embodiment of the invention, where a first user starts a regular call with a second user, the second user accepts it with "Only Flash Call".
**Figure 6****.-** shows one embodiment of the invention, where a first user is in a call with a second user, a third user then calls the first user, so the first user accepts with "Only Flash Call" mode and the second user is put on hold.
**Figure 7****.-** shows one embodiment of the invention, where the second user configures his device to accept only Flash Calls. Then, the first user starts a regular call with him.
**Figure 8****.-** shows one embodiment of the invention, where the second user marks the first user as a Flash Call only user. Then, the first user starts a regular call with him.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Present invention discloses a method for managing time-restricted communications between a first communication device and a second communication device, such as smartphones. The expression "time restricted communications" used through this application refers to calls in which a contract between caller and callee regarding the length of the call is preset. Said calls may be referred as "flash calls" from now on.

Flash calls can also be applied to any voice/video communication system such as regular phone calls, voice over IP calls, etc. Present invention provides the technical means to implement said flash calls.

One embodiment of the invention comprises two software applications running in the callee and the caller (preferably the same application supports both modes) and a network element, such as a server, to synchronize the signaling before, during and at the end of the flash call.

Alternatively, in one embodiment of the invention, the server is avoided, so peer to peer communication is carried out having one of the sides (preferably the caller) controlling the timer that will end the call on timeout.

Flash call negotiation can happen either directly as part of the call signaling or in a side channel, while flash call disconnection can happen by different actions, such as: the server sending a hang-up to one or both call legs; the server indicating time out to one or both clients, where the timeout receiving client disconnects the call; or one or both clients starting a countdown at the beginning of a call and disconnecting the call when the count reaches zero.

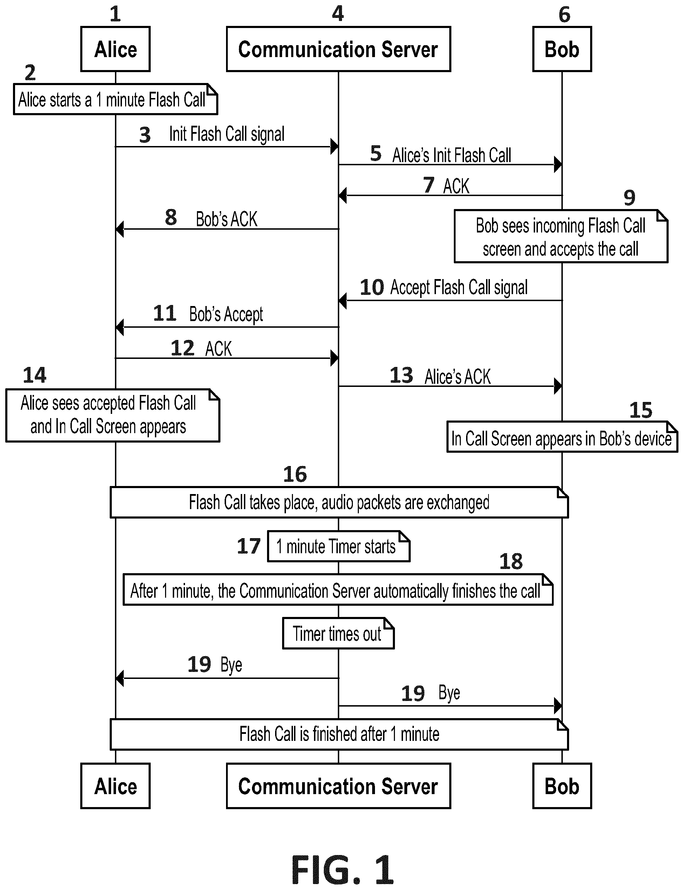

**Figure 1** shows one embodiment of present invention, where a first user (Alice) starts a flash call, with a second user (Bob) and after the time set, the call is automatically finished by a server.

Specifically, Alice (1) starts (2) a 1 minute flash call through a specific client installed on her smartphone. The client installed on Alice's smartphone sends (3) a message to a communication server (4), which in turn communicates (5) to Bob (6) that a flash call is intended by Alice. The client installed on Bob's smartphone, which may be a specific client for the callee or the same client than Alice's, but running in a callee mode, sends the corresponding acknowledgment (7) to the communication server, which in turn sends an acknowledge (8) to Alice on behalf of Bob. Once Bob sees the incoming flash call on his smartphone and he accepts the flash call (9), by means of any of the commonly interactions available on smartphones, the client installed on Bob's device sends a message to the communication server accepting (10) the flash call. The communication server inform (11) Alice that Bob has accepted the flash call and, after corresponding acknowledgments (12, 13), "in call screens" (14, 15) appears on both communication devices, the flash call takes place (16) and audio packets are exchanged. As soon as the flash call is established, a timer starts (17). In this example, the timer is set to 1 minute, but any other length could be set. When the time set is run out, 1 minute in this case, the communication server automatically finishes (18) the flash call. The flash call is finished by the communication server sending a hang-up (19) to one or both call legs, but according to other embodiment of the invention, it can also be finished by the communication server sending a timeout message to one or both clients, which disconnects the flash call as response to receiving the timeout message.

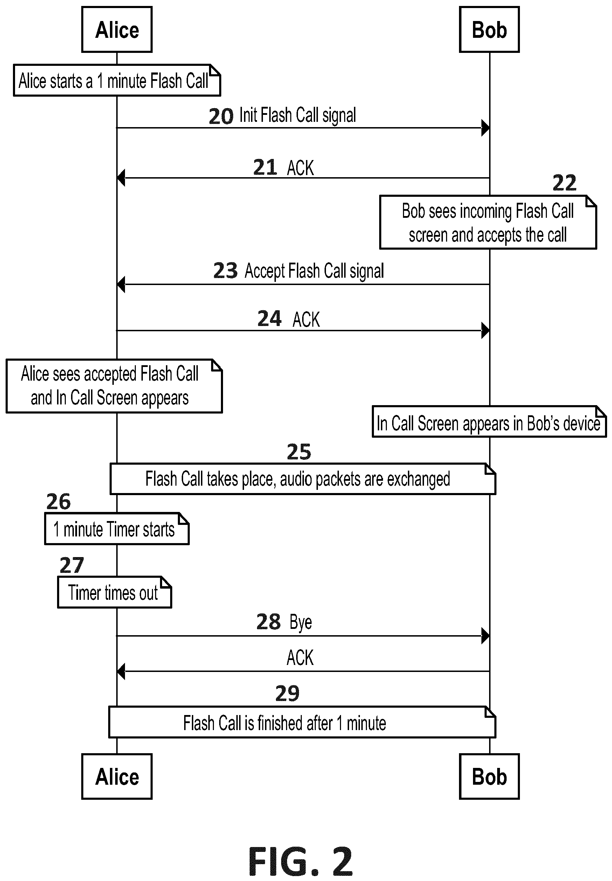

**Figure 2** shows a serverless embodiment of present invention, where a first user (Alice) starts a flash call, with a second user (Bob) in a similar way than the embodiment of figure 1, but in this case the flash call is finished by a timer set on Alice's smartphone.

In this embodiment, Alice starts a time restricted call, of 1 minute for example, through the specific client installed on her smartphone. The client installed on Alice's smartphone sends a message directly to Bob inviting (20) him to establish a flash call. The client installed on Bob's smartphone, sends the corresponding acknowledgment (21) to Alice and shows an incoming call screen to Bob. Once Bob sees the incoming flash call and he accepts (22) the flash call, the client installed on Bob's smartphone sends a message to Alice accepting (23) said flash call. The client installed on Alice's smartphone send the corresponding acknowledgement (24) back to Bob, an "In call" screen appears on both smarpthones, the flash call takes place (25) and audio packets begin to be exchanged. As soon as the flash call is established, a timer starts (26) on at least one of the clients, preferably at the caller side. In this embodiment, the timer is set to 1 minute, but any other length could be set. When the time set is run out (27), the client automatically disconnects (28) the flash call and the flash call is finished (29).

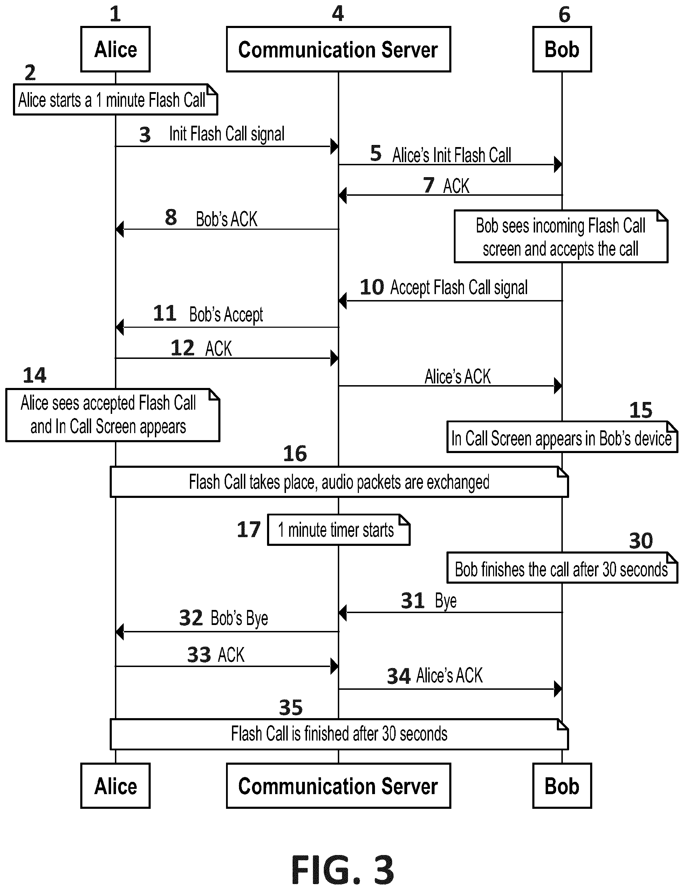

The length set for the flash calls is a maximum length, but any one of the participants of a call could finish it before the timer reaches zero. Figure 3 shows an example of this case where, starting with the embodiment of figure 1, a flash call is established between Alice and Bob. A timer starts a countdown at the communication server (for example 1 minute), but Bob decide to finish (30) the call after only 30 seconds (before the timer reaches zero), so it is send a message (31) to the communication server signaling the termination of the call. The communication server forwards (32) the message from Bob's smartphone to Alice's smarpthone. After corresponding acknowledgments (33, 34) sent by Alice's smartphone to Bob's smartphone, the flash call is finished without waiting the timer reaches zero.

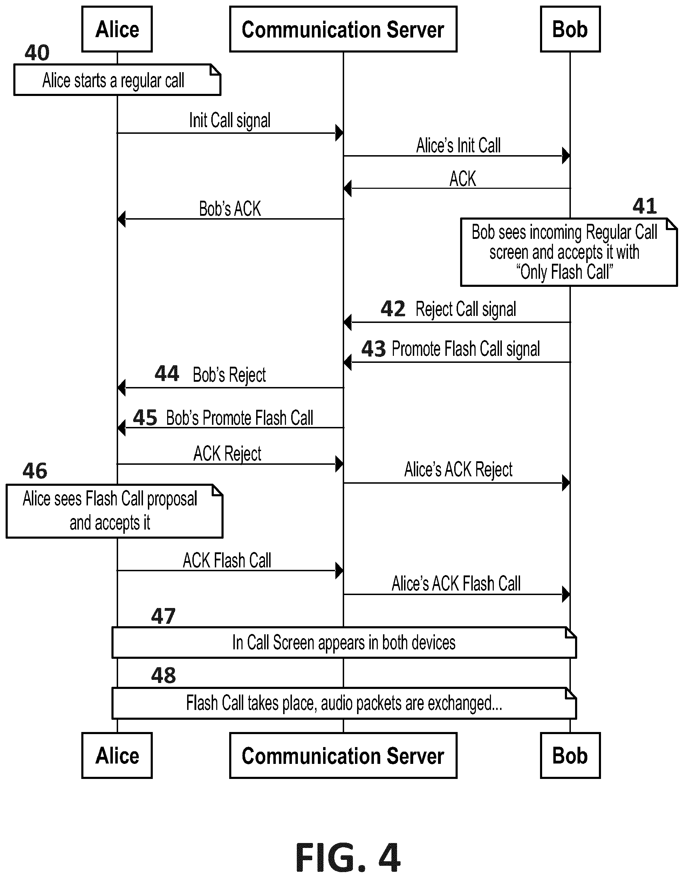

In **Figure 4** it is shown another embodiment of the invention, where the caller, Alice, starts a regular call (40) following the normal process that is used to set up a regular connection. Then, an incoming call screen is displayed on Bob's smartphone, but the specific client installed on Bob's smartphone detects the incoming call and offer him an additional answering option (41) to accept the incoming call only as a flash call. Once Bob has selected the option of accepting the incoming call only as a flash call, the client installed on Bob's device sends a message to the communication server signaling the rejection (42) of the regular call and another message signaling to promote (43) a flash call. The communication server forwards (44, 45) said messages to Alice's smartphone, whose client sends back to Bob an acknowledgment for the rejection of the regular call, displays on Alice's smartphone the flash call proposal sent by Bob and, once Alice accepts (46) the flash call, sends the corresponding acknowledgment to the communication server accepting the flash call. As the acknowledgment of Alice reaches Bob's smarpthone, an in call screen appears (47) in both devices, the flash call takes place (48) and audio packets are exchanged.

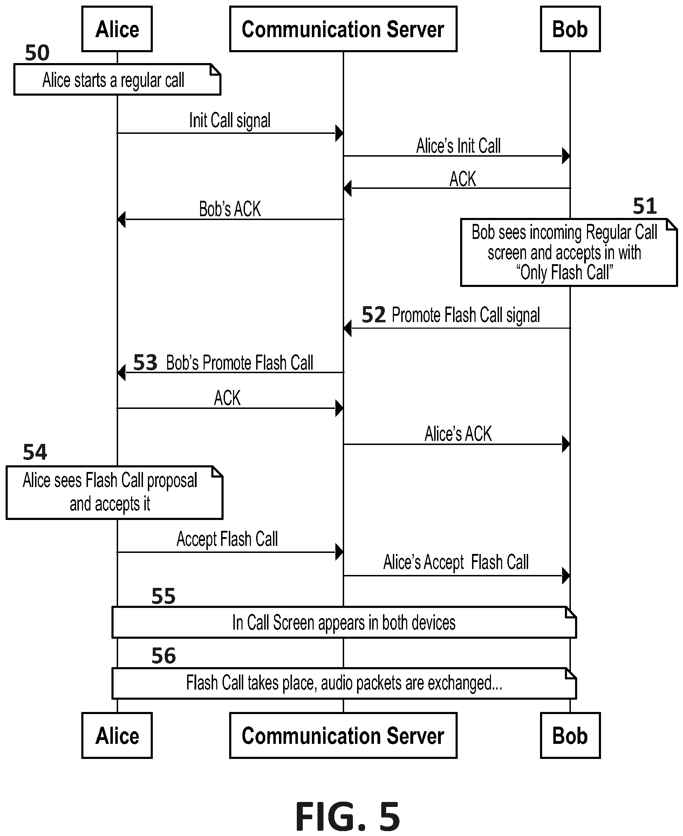

**Figure 5** shows another embodiment of present invention where the caller, Alice, starts a regular call (50) following the normal process that is used to set up a regular connection.
Then, an incoming call screen is displayed on Bob's smartphone, but the specific client installed on Bob's smartphone detects the incoming call and offer him an additional answering option (51) to accept the incoming call only as a flash call. Once Bob has selected the option of accepting the incoming call only as a flash call, the client installed on Bob's device sends a message to the communication server signaling to promote (52) a flash call.
The communication server forwards (53) said message to Alice's smartphone, whose client displays on Alice's smartphone the flash call proposal sent by Bob and, once Alice accepts (54) the flash call, sends the corresponding acknowledgment to the communication server accepting the flash call. As the acknowledgment of Alice reaches Bob's smartphone, an in call screen appears (55) in both devices, the flash call takes place (56) and audio packets are exchanged.

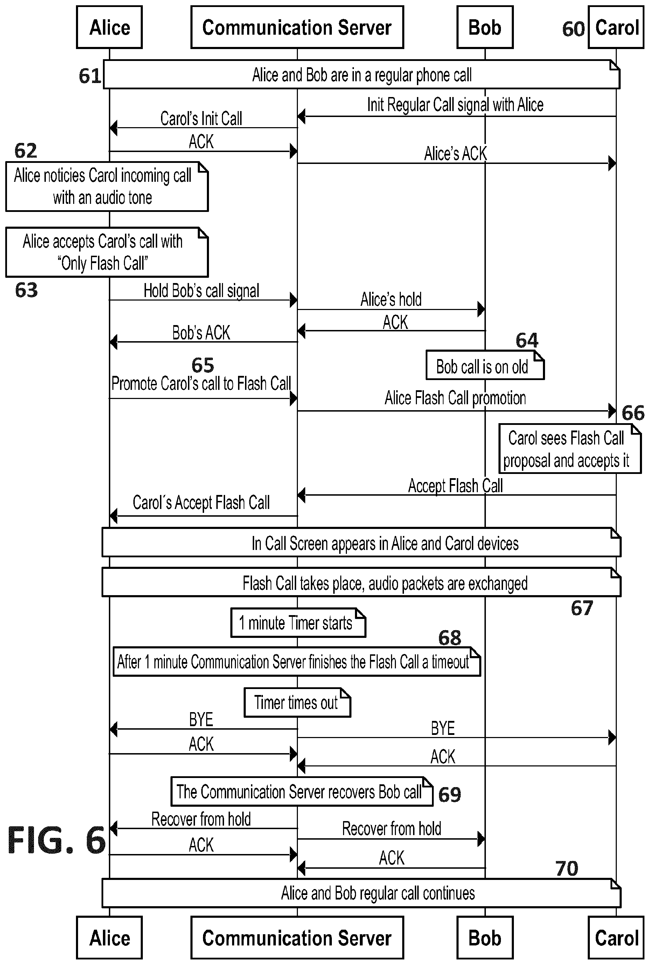

**Figure 6** refers to another practical case where there is a third person involved. In this particular case Alice is in a regular call (61) with Bob, Carol (60) then calls Alice. Alice accepts with "only flash call" mode. Bob is put on hold while Alice and Carol are on the flash call. This sequence is shown in figure 6, where the signaling of a regular call is initiated by Carol's communication device while Alice and Bob are already having a conversation. Once the client installed on Alice's device detects the incoming call, a notification is provided (62) to Alice (for example an audio tone). Then, Alice can accept or reject the incoming call as usual, but the client of present invention offers an additional option of selecting "only flash calls". This option will be a reasonable choice for having a short talk with a third party not involved in the original conversation, while the other part is put on hold. Once Alice has selected to accept (63) the incoming call only as a flash call, the client installed on Alice's smartphone sends the corresponding message to the communication server signaling to hold Bob's call. Bob's smartphone acknowledges the signaling received from the communication server and it is put on hold (64) while the client installed on Alice's smartphone starts signaling to promote (65) incoming call (Carol's) to a flash call. Once Carol receives the proposal of a flash call sent by Alice, trough the communication server, and she accepts (66) it, an in call screen will appear in both Alice and Carol devices, the flash call takes places and audio packets are exchanged (67). A timer in the communication server starts a countdown as soon as the flash call is established. When the timer is run out, the communication server finishes (68) the flash call with a timeout and corresponding signaling messages are sent to both Alice's and Bob's devices. Once both Alice's and Bob's devices have sent the corresponding acknowledgements to the communication server, the communication server recovers (69) Bob's call, which was still on hold, so Alice and Bob can continue (70) their regular call.

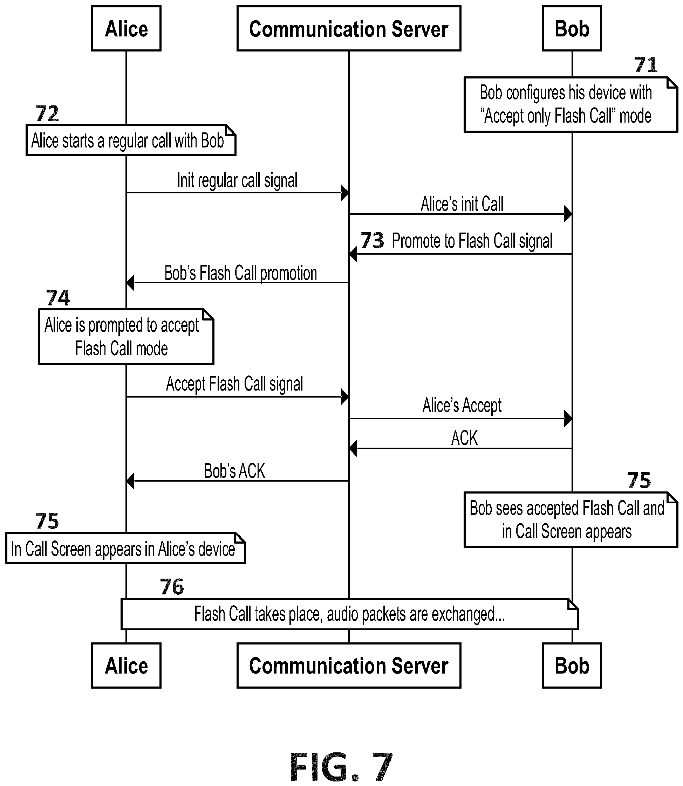

In **Figure 7** it is shown a particular embodiment of the invention where one of the communication devices is configured to accept only flash calls. In this case, Bob has configured (71) his smartphone to accept only flash calls. Alice starts a regular call (72) with Bob through the communication server, but when the specific client installed on Bob's device detects an incoming call, it sends back to the communication server a signal for promoting it (73) to a flash call. Bob's flash call promotion reaches Alice's device and the client installed on Alice's device prompts (74) Alice to accept the flash call. Once Alice has accepted the flash call and the corresponding signaling has been sent to Bob, through the communication server, an in call screen will be displayed (75) on both Alice's and Bob's devices, the flash call is established (76) and audio packet are exchanged.

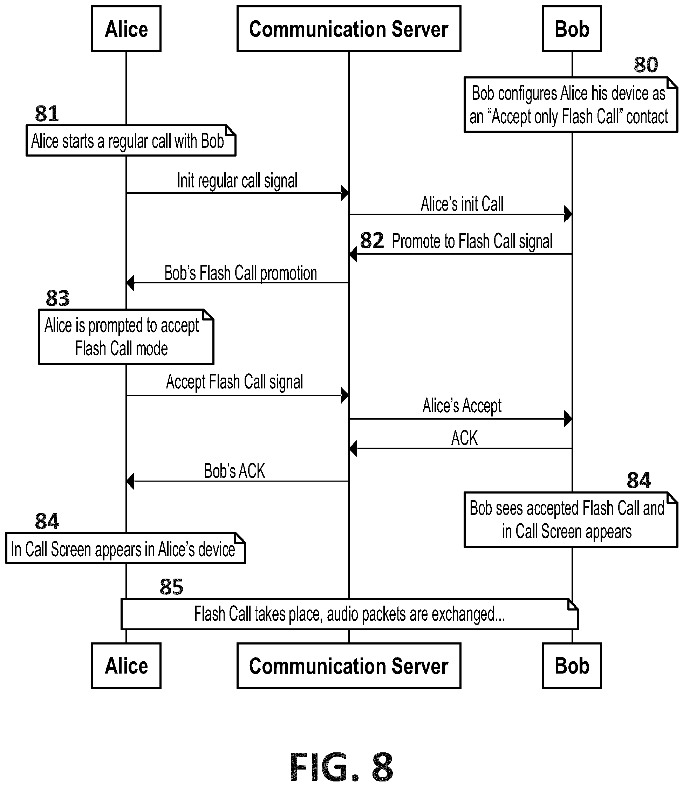

In **Figure 8** another particular embodiment of the invention is shown, where people from the contact list of a user can be restricted to only ask for flash calls.

As an example of this particular embodiment, the sequence of figure 8 first illustrates Bob marking (80) Alice as a 'flash call only' user. Then, Alice starting a regular call (81) trough the communication server with the corresponding signaling involved, but when the specific client installed on Bob's device detects an incoming call, it sends back to the communication server a signal for promoting it (82) to a flash call. Bob's flash call promotion reaches Alice's device and the client installed on Alice's device prompts (83) Alice to accept the flash call. Once Alice has accepted the flash call and the corresponding signaling has been sent to Bob, through the communication server, an in call screen will be displayed (84) on both Alice's and Bob's devices, the flash call is established (85) and audio packet are exchanged.

Aforementioned embodiments of present invention may be modified in several ways to improve their functionalities. For example, it is considered to setup a particular contact from the contact list of a user, so all his calls are promoted to flash calls. It would be similar to contact blocking, but instead of a complete blocking, it will allow him only to make short calls.

It is also considered in one embodiment a push-to-talk button, so one or both parties are forced to keep pressing certain button to avoid disconnecting the call. Thus, the feeling that it is indeed a short lived call is increased.

Embodiments described above have been mainly referred to audio communications, but video flash calls are also considered.

In one embodiment of the present invention, the length of a flash call may be configured by the user instead of having a fixed one. In the case that the length of a flash call is left to be set by the user, it is also considered a mechanism to negotiate said length between the caller and the callee. For instance, a menu with 3 different lengths may be offered to the callee, so he can accept the length which he thinks he can afford.

A notification sound may be delivered to the users before the timer is run out, so they are aware that the flash call is about to end. For example, an audio beep or a ringing signal heard when only 10 second remains.

When a flash call has been timed out, it is considered to provide an audio message informing the participants of the flash call that the same has ended, rather than just providing the standard busy tone.

According to one embodiment of present invention, it is possible to schedule a flash call. The caller sends a request for a flash call, but the options for the callee are not limited to answer or not, but he can postpone the flash call and schedule it.

Embodiments described above regards to communications between only two parties for the sake of simplicity, but present invention also considers multi-party flash call. Each callee can either answer or decline the invitation. The flash call can start when all callees have chosen one or the other, or immediately after the first answers.

Flash call capabilities of each contact can be displayed on the contact list of a user to show whether they support flash call functionalities.

Further configuration options provided in some embodiments of present invention regards to blocking flash calls to a callee whom a caller called within the last N minutes. Another option is to modify the way the time limit is shown, so instead of providing a countdown, the user is provided with an exact finishing time, such as a message saying "*guaranteed to finish by 14:00*" rather than "*guaranteed to finish within 1 minute*"*.*

The callee can be offered for the same incoming call both normal and flash call option, so he can choose in which way to answer. However, the callee may also accept the call as a flash call and then deciding to remove the time limit during the call (with or without the need for the caller's consent).

## Claims

1. Method for managing time restricted communications between users of a telecommunication network comprising the steps of:
a) sending an invitation message to establish a time restricted call from a first user's communication device to a second user's communication device, wherein the invitation message is associated to a predetermined time parameter of maximum length for the call;
b) receiving the invitation message associated to the predetermined time parameter of maximum length for the time restricted call by the second user's communication device;
c) in case the second user accepts establishing the time restricted call of the predetermined maximum length associated to the invitation message, establishing the time restricted call between the first user and the second user;
d) starting a time counter, in response to establishing the time restricted call;
e) once the time counter reaches the predetermined maximum length associated to the invitation message, automatically finishing the time restricted call.

2. Method according to claim 1, wherein the invitation message to establish a time restricted call from a first user's communication device to a second user's communication device is sent in response to the previous steps of:
- sending an invitation message to establish a regular call from the second user's communication device to the first user's communication device;
- the first user's communication device rejecting the invitation message to establish a regular call.

3. Method according to claim 1 wherein the invitation message to establish a time restricted call from a first user's communication device to a second user's communication device is sent by the first user's communication device in response to an invitation message to establish a regular call received from the second user's communication device.

4. Method according to claim 3 wherein the first user's communication device is set to only accept time restricted call invitation messages, wherein the invitation message to establish a time restricted call is a promoting message, prompting the second user to accept a time restricted call instead the regular call.

5. Method according to claim 3 wherein the second user is marked as time restricted call user on the contact list of the first user, wherein the invitation message to establish a time restricted call is a promoting message, prompting the second user to accept a time restricted call instead the regular call.

6. Method according to any one of the previous claims, wherein the second user's communication device is already engaged in a regular call with a third user's communication device when receiving the invitation message from the first user's communication device, further comprising the steps of:
- providing a notification of an incoming time restricted call to the second user's communication device;
- in case the second user accepts the incoming time restricted call, putting on hold the third user's communication device;
- establishing a time restricted call between the first user and the second user;
- once the time restricted call is finished, recovering the regular call between the first user and the third user.

7. Method according to any one of previous claims wherein all the messages sent/received by user's communication devices are exchanged through a communication server in charge of call signaling.

8. Method according to claim 7, wherein the time counter is implemented in the communication server, further comprising, finishing the time restricted call by the communication server sending a call disconnect request to at least one of the first and the second user's communication devices.

9. Method according to any one of claims 1-7 wherein the time counter is implemented in the first user's communication device, further comprising finishing the time restricted call by the first user's communication device sending a call disconnect request to the second user's communication device.

10. Method according to any one of previous claims wherein accepting, by the second user's communication device, the invitation message sent by the first user's communication device, further comprising:
- displaying a prompt message, containing the predetermined time parameter of maximum length for the call, on a display of the second user's communication device; and
- the second user making an interaction on the second user's communication device to accept establishing the time restricted call.

11. Method according to any one of previous claims wherein the maximum length of the time parameter associated to a time restricted call is determined by the first user or the second user.

12. Communication device for managing time restricted communications with other communication devices of a telecommunication network, configured for:
- sending invitation messages to establish time restricted calls with other user's communication devices, wherein the invitation message is associated to a predetermined time parameter of maximum length for the call;
- receiving, from other user's communication devices, invitation messages associated to the predetermined time parameter of maximum length for the time restricted calls;
- accepting to establish time restricted calls of the predetermined maximum length associated to the invitation message;
- establishing a time restricted call with other communication devices;
- starting a time counter, in response to establishing the time restricted call; and
- once the time counter reaches the predetermined maximum length assigned, automatically finishing the time restricted call.

13. Network element for managing time restricted communications between a first user's communication device and a second user's communication device of a telecommunication network, configured for:
- exchanging messages sent by the first user's communication device and by the second user's communication device;
- starting a time counter, in response to establishing a time restricted call;
- once the time counter reaches a predetermined maximum length, automatically finishing the time restricted call.

14. System for managing time restricted communications between users of a telecommunication network **characterized by** comprising:
- a first communication device configured for sending an invitation message to establish a time restricted calls with a second user's communication devices, wherein the invitation message is associated to a predetermined time parameter of maximum length for the call; and if the second user accepts the invitation, establishing the time restricted call between the first user and the second user;
- a second communication device configured for receiving, from the first user's communication device, the invitation messages associated to the predetermined time parameter of maximum length for the time restricted calls;
- a communication server according to claim 13.

15. Computer program product comprising computer program code adapted to perform the method according to any of the claims 1-11 when said program code is executed on a computer, a digital signal processor, a field-programmable gate array, an application-specific integrated circuit, a micro-processor, a micro-controller, or any other form of programmable hardware
